Europäisches Patentamt

European Patent Office

Office européen des brevets

(11) Veröffentlichungsnummer: **0 383 965**

**A1**

# EUROPÄISCHE PATENTANMELDUNG

(21) Anmeldenummer: **89102956.3**

(22) Anmeldetag: **21.02.89**

(51) Int. Cl.⁵: **G06F 7/52**

(43) Veröffentlichungstag der Anmeldung:
**29.08.90 Patentblatt 90/35**

(84) Benannte Vertragsstaaten:
**AT BE CH DE FR GB IT LI NL SE**

(71) Anmelder: **International Business Machines
Corporation
Old Orchard Road
Armonk, N.Y. 10504(US)**

(72) Erfinder: **Getzlaff, Klaus Jörg, Ing.(grad)
Friesenweg 26**
**D-7036 Schönaich(DE)**
Erfinder: **Dao-Trong, Son, Dr-Ing.
Schmellbachstrasse 20B**
**D-7000 Stuttgart 80(DE)**
Erfinder: **Helwig, Klaus, Dipl.-Ing.
Richard Wagner Strasse 23**
**D-7032 Sindelfingen(DE)**

(74) Vertreter: **Jost, Ottokarl, Dipl.-Ing.
IBM Deutschland GmbH Patentwesen und
Urheberrecht Schönaicher Strasse 220
D-7030 Böblingen(DE)**

(54) **Multiplizierwerk.**

(57) Es wird ein Multiplizierwerk zum Multiplizieren zweier binärer Operanden vorgeschlagen, das eine Kodiereinheit, eine aus zwei Multiplizierfeldern aufgebaute Multipliziereinheit sowie eine Verknüpfungseinheit enthält. Die Kodiereinheit, der der zweite Operand zugeführt ist, erzeugt Faktoren nach dem Booth-Algorithmus. Die beiden Multiplizierfelder sind jeweils von dem ersten Operanden sowie von den zu den höherwertigeren Stellen bzw. den niederwertigeren Stellen des zweiten Operanden zugehörigen Faktoren beaufschlagt. In den beiden Multiplizierfeldern wird zeitparallel die Multiplikation der Faktoren mit dem ersten Operanden zu jeweils einem Teilendprodukt durchgeführt. Die beiden Teilendprodukte sind der Verknüpfungseinheit zugeführt, die daraus unter Berücksichtigung des eingangs verwendeten Algorithmus das Endprodukt erzeugt.

FIG. 1

EP 0 383 965 A1

## Multiplizierwerk

Die Erfindung betrifft ein Multiplizierwerk nach dem Oberbegriff des Patentanspruches 1. Ein derartiger Multiplizierer ist aus der EP 129 039 B1 bekannt. Bei dem dort offenbarten Multiplizierer wird einer nach dem Booth-Algorithmus arbeitenden Kodiereinheit ein Operand Y zugeführt, die daraus eine Folge von Ziffernpaaren bildet. Diese Ziffernpaare werden einer nachfolgenden Multiplizier-Addiereinheit zugeführt, die des weiteren von einem zweiten Operanden X beaufschlagt ist. In dieser Multiplizier-Addiereinheit wird der Operand Y mit den von der Kodiereinheit gebildeten Ziffernpaaren unter Bildung von Zwischenprodukten multipliziert. Diese Zwischenprodukte werden dann zu einem Endprodukt addiert.

Wie aus den in der Patentschrift enthaltenen Fallbeispielen hervorgeht, ist der beschriebene Multiplizierer insbesondere für Operanden mit einer eher geringen Stellenzahl vorgesehen, beispielsweise für zehnstellige Operanden. Bei Operanden mit einer hohen Stellenzahl hingegen, beispielsweise bei sechzigstelligen Operanden, weist der beschriebene Multiplizierer den Nachteil auf, daß insbesondere durch die aufeinanderfolgende Addition der Zwischenprodukte sehr hohe Verarbeitungszeiten entstehen.

Aufgabe der Erfindung ist es, ein Multiplizierwerk zu schaffen, das auch bei einer höheren Stellenzahl der Operanden eine möglichst geringe Verarbeitungszeit für deren Multiplikation benötigt.

Diese Aufgabe wird bei einem Multiplizierer der eingangs genannten Art durch die kennzeichnenden Merkmale des Patentanspruches 1 gelöst. Durch die Aufteilung der Multipliziereinheit in zwei Multiplizierfelder und die entsprechende Zuführung der aus dem zweiten Operanden gebildeten Faktoren zu den beiden Multiplizierfeldern ist es möglich, zeitparallel zueinander in den beiden Multiplizierfeldern den ersten Operanden mit den jeweiligen Faktoren zu multiplizieren und nachfolgend die erhaltenen Zwischenprodukte zu addieren. An den Ausgängen der beiden Multiplizierfelder steht somit etwa zeitgleich je ein Teilendprodukt zur Verfügung, die in der nachfolgenden Verknüpfungseinheit zum Endprodukt verknüpft werden. Durch diese zeitparallele Verarbeitung der beiden Operanden wird die Anzahl aufeinanderfolgender Additionen von Zwischenergebnissen geringer. Dies wiederum hat eine wesentliche Verringerung der durch die Multiplikation hervorgerufenen Zeitverzögerung zur Folge.

Bei einer Ausgestaltung des Multiplizierers enthält die Verknüpfungseinheit mehrere Addierfelder. Mit Hilfe dieser Addierfelder wird die stellenmäßige Verknüpfung der beiden von den Multiplizierfeldern gebildeten Teilendprodukte durchgeführt.

Das bei einer weiteren Ausgestaltung des Multiplizierers vorgesehene Übertragsaddierfeld dient der Bildung des Endprodukts aus den von den Addierfeldern stellenweise erzeugten Summen und Überträgen.

In weiterer Ausgestaltung des Multiplizierers ist eine Übertragsmodifiziereinheit vorgesehen, der in Abhängigkeit von dem in der Kodiereinheit verwendeten Algorithmus bestimmte Signale zugeführt sind. Bei Anwendung des Booth- Algorithmus ist der Übertragsmodifiziereinheit das Vorzeichen des niederwertigeren Teilendprodukts sowie jeweils der Übertrag desjenigen Addierglieds des zweiten und des dritten Addierfeldes zugeführt, das der höchstwertigen Stelle des niederwertigeren Teilendprodukts zugeordnet ist. Durch diese Maßnahme wird der eingangs in der Kodiereinheit verwendete Algorithmus bei der Verknüpfung der beiden Teilendprodukte berücksichtigt.

Bei einer weiteren Ausgestaltung des Multiplizierers erzeugt die Kodiereinheit aus den Ziffern des zweiten Operanden unter Anwendung des Booth-Algorithmus in der im Patentanspruch 9 angegebenen Weise bestimmte Ausgangssignale in Abhängigkeit derer die Multipliziereinheit die Ziffern des ersten Operanden in der im Patentanspruch 10 angegebenen Weise auswählt. Durch die angegebene Festlegung der Ausgangssignale sowie deren Verknüpfung mit den Ziffern des ersten und zweiten Operanden in der angegebenen Weise wird erreicht, daß bei einer integrierten Bauweise des Multiplizierers der Platzbedarf für die die Multiplikationen ausführenden Auswahlschaltungen aufgrund einer geringeren Anzahl von erforderlichen Transistoren geringer wird.

In weiterer Ausgestaltung des Multiplizierers werden die in den Multiplizierfeldern gebildeten Zwischenprodukte nacheinander addiert und die Vorzeichen der entstehenden Zwischensummen jeweils um 2 Stellen propagiert. Damit wird erreicht, daß für die Addition der Zwischenprodukte eine geringere Anzahl von Addiergliedern und somit bei integrierter Bauweise ein verringerter Flächenbedarf erforderlich ist.

Bei einer weiteren Ausgestaltung des Multiplizierers sind die Multiplizierfelder derart aufgebaut, daß die Vorzeichen der Teilendprodukte mittels einer Rückkopplung des Übertrags aus der höchstwertigsten Stelle des Teilendprodukts gebildet werden. Auf diese Weise wird eine weitere Stufe bei der Bildung der Teilendprodukte vermieden und dadurch die durch die Multiplikation entstehende Zeitverzögerung verkürzt.

Bei einer weiteren Ausgestaltung des Multiplizierers sind den Multiplizierfeldern Zwischenspeicher zugeordnet. Auf diese Weise ist es möglich, den Multiplizierfeldern bereits die nächsten Operanden zuzuführen, während die Verknüpfungseinheit noch die Verknüpfung der vorhergehenden Operanden

EP 0 383 965 A1

vornimmt.

Weitere Ausgestaltungen und Vorteile der Erfindung ergeben sich aus der nachfolgenden Beschreibung eines Ausführungsbeispieles eines erfindungsgemäßen Multiplizierers, der in der Zeichnung dagestellt ist. Es zeigt :

Fig. 1 ein schematisches Blockschaltbild des Aufbaus des Multiplizierers,

Fig. 2A eine Tabelle, in der der Zusammenhang zwischen den Ziffern des zweiten Operanden und den den Multiplizierfeldern zugeführten Faktoren angegeben ist,

Fig. 2B ein Beispiel für eine Multiplikation zweier Operanden, bei dem die in der Fig. 2A angegebene Faktorenbildung zur Anwendung kommt,

Fig 3A ein schematisches Blockschaltbild einer Auswahlschaltung,

Fig 3B eine Tabelle aus der sich das Ausgangssignal der Auswahlschaltung in Abhängigkeit von den entsprechend der Fig. 2A gebildeten Faktoren ergibt,

Fig 3C und 3D sowie Fig 3E und 3F zwei schematische Logikschaltbilder sowie deren schaltungsmäßige Realisierung jeweils der Auswahlschaltung,

Fig 4 ein schematisches Blockschaltbild eines der beiden Multiplizierfelder,

Fig 5A und 5B die Verknüpfung der beiden von den Multiplizierfeldern gebildeten Teilendprodukte in einem Übersichtsschaubild und einem Blockschaltbild,

Fig 6A ein schematisches Logikschaltbild der Übertragsmodifiziereinheit,

Fig 6B ein schematisches Logikschaltbild eines Teils des Übertragsaddierfeldes sowie

Fig 6C und 6D schematische Logikschaltbilder von Ausführungsformen der in der Fig. 6A gezeigten Übertragsmodifiziereinheit.

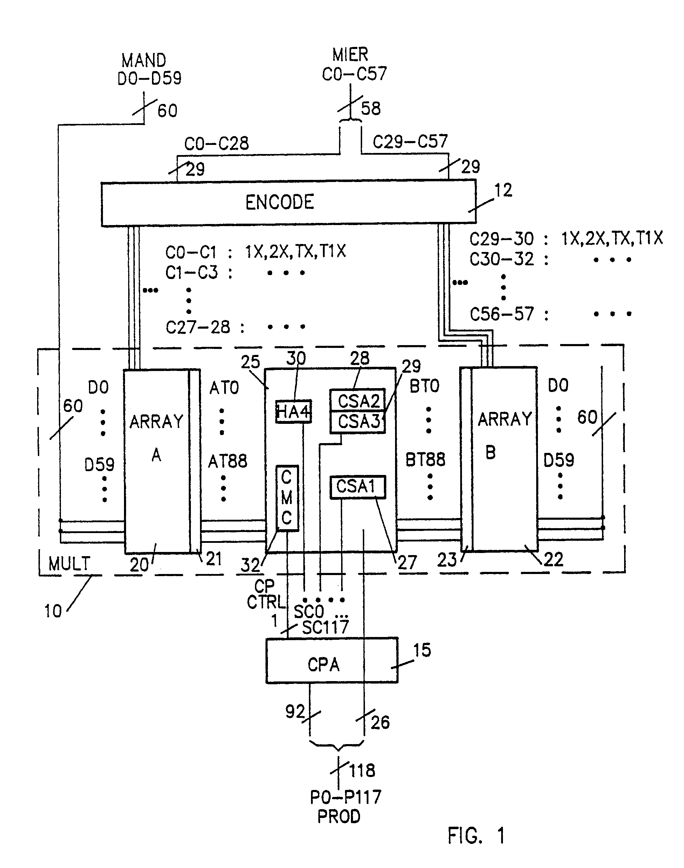

Der in der Fig. 1 als schematisches Blockschaltbild dargestellte Multiplizierer ist aus einer Multipliziereinheit MULT 10, einer Kodiereinheit ENCODE 12 und einem Übertragsaddierfeld CPA 15 aufgebaut. Der Multiplizereinheit 10 ist als erster Operand ein Multiplikand MAND, bestehend aus den binären Ziffern D0 bis D59, zugeführt. Die Kodiereinheit 12 ist von einem Multiplikator MIER, dem zweiten Operanden, der aus den binären Ziffern C0 bis C57 besteht, derart beaufschlagt, daß die Ziffern C0 bis C28 und C29 bis C57 des Multiplikators jeweils für sich zusammengefasst sind. Bei den mit dem Index "0" gekennzeichneten Ziffern handelt es sich um die Ziffern mit dem höchsten Stellenwert ("most significant bit").

Wie nachfolgend noch erläutert werden wird, erzeugt die Kodiereinheit 12 aus den Ziffern C0 bis C28 und C29 bis C57 des Multiplikators bestimmte Ausgangssignale nach dem Booth-Algorithmus. Diese Ausgangssignale sind in der Fig. 1 mit den Bezeichnungen 1X, 2X, TX, T1X gekennzeichnet, wobei jeweils den Ziffer C0 bis C1, C1 bis C3 usw. sowie C29 bis C30, C30 bis C32 usw. ein Satz dieser Ausgangssignale zugeordnet ist. Diese aus den Ziffern C0 bis C28 und C29 bis C57 des Multiplikators abgeleiteten Ausgangssignale sind der Multipliziereinheit 10 zugeführt.

Die Multipliziereinheit 10 ist aus zwei Multiplizierfeldern ARRAY A 20 und ARRAY B 22, zwei den Multiplizierfeldern 20, 22 zugeordneten Zwischenspeichern 21, 23 und einer Verknüpfungseinheit 25 aufgebaut. Die zu den Ziffern C0 bis C28 des Multiplikators gehörigen Ausgangssignale der Kodiereinheit 12 sind dem Multiplizierfeld 20 zugeführt, während die den Ziffern C29 bis C57 des Multiplikators zugehörigen Ausgangssignale der Kodiereinheit 12 das Multiplizierfeld 22 beaufschlagen. In den beiden Multiplizierfeldern 20, 22 werden, wie noch ausgeführt werden wird, die Ziffern C0 bis C28 und C29 bis C57 des Multiplikators mit den Ziffern D0 bis D59 des Multiplikanden multipliziert. Als Ergebnisse dieser Mulitplikationen steht am Ausgang des Multiplizierfeldes 20 ein Teilendprodukt bestehend aus den Ziffern AT0 bis AT88 und am Ausgang des Multiplizierfeldes 22 ein Teilendprodukt bestehend aus den Ziffern BT0 bis BT88 zur Verfügung.

Diese beiden Teilendprodukte AT0 bis AT88, BT0 bis BT88 werden in den Zwischenspeichern 21, 23 gespeichert.

Die Teilendprodukte AT0 bis AT88 und BT0 bis BT88 sind der Verknüpfungseinheit 25 zugeführt. Diese Verknüpfungseinheit 25 enthält ein erstes, ein zweites, ein drittes und ein viertes Addierfeld CSA1 27, CSA2 28, CSA3 29 und HA4 30. Diese vier Addierfelder 27, 28, 29, 30 erzeugen aus den der Verknüpfungseinheit 25 zugeführten Eingangssignalen eine Anzahl von Ausgangssignalen, die in der Fig. 1 mit der Bezeichnung SC0 bis SC117 gekennzeichnet sind.

Des weiteren enthält die Verknüpfungseinheit 25 eine Übertragsmodifiziereinheit CMC 32, mit deren Hilfe ein Ausgangssignal CPCTRL erzeugt wird.

Die Ausgangssignale SC0 bis SC117 und CPCTRL der Verknüpfungseinheit 25 beaufschlagen das Übertragsaddierfeld 15. Dieses bildet aus den genannten Signalen ein aus den binären Ziffern P0 bis P117 bestehendes Ausgangssignal PROD, das dem Produkt aus Multiplikand und Multiplikator entspricht.

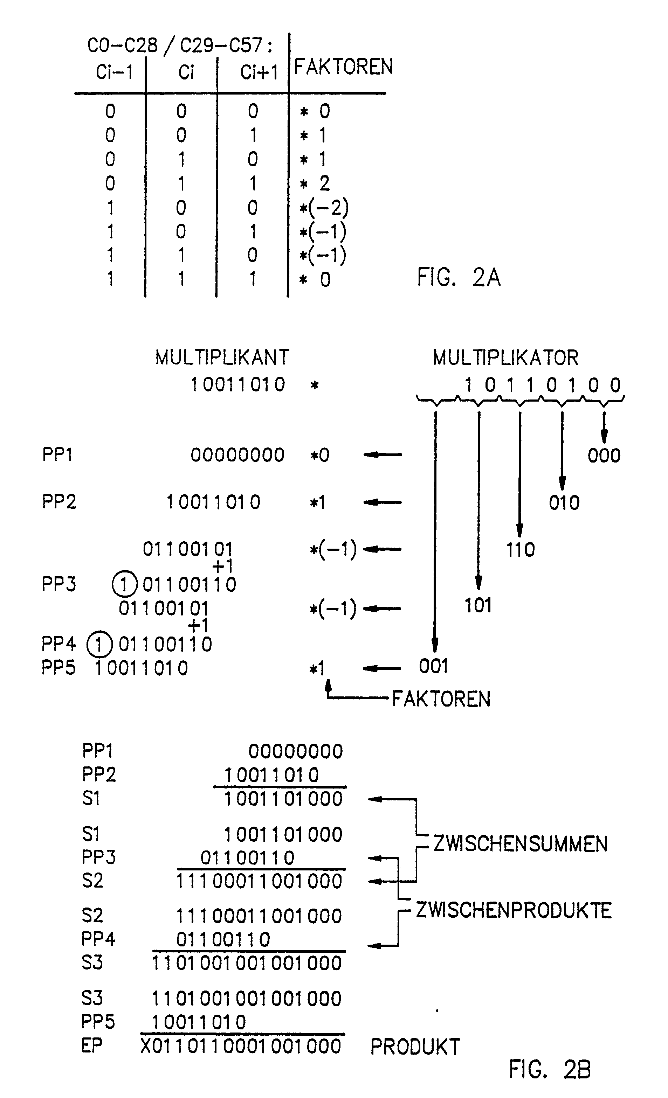

Anhand der in der Fig. 2A gezeigten Tabelle und dem in der Fig. 2B dargestellten Rechenbeispiel wird nachfolgend der verwendete Booth-Algorithmus erläutert. Bei diesem Algorithmus werden Ziffernpaare wie

3

folgt gebildet:

C56 bis C57, C54 bis C55 usw. sowie

C27 bis C28, C25 bis C26 usw..

Allgemein ausgedrückt lauten diese Ziffernpaare:

$C_i - 1$ bis $C_i$, mit

i = 57, 55, 53 usw. sowie

i = 28, 26, 24 usw..

Zu diesen Ziffernpaaren wird jeweils die nachfolgende Ziffer $C_i + 1$ hinzugefügt. Aus diesen drei Ziffern $C_i - 1$, $C_i$, $C_i + 1$ ergeben sich in Abhängigkeit der jeweiligen Binärwerte bestimmte Faktoren entsprechend der Tabelle in Fig. 2A.

Mit diesen Faktoren wird der Multiplikand multipliziert, wie dies anhand eines Beispiels in Fig. 2B dargestellt ist. Dort ist der Multiplikator in Ziffernpaare aufgeteilt und es ist jedem Ziffernpaar eine zusätzliche Ziffer hinzugefügt. Entsprechend der Tabelle in Fig. 2A ergibt sich daraus jeweils ein Faktor, mit dem der Multiplikand zu multiplizieren ist. Dabei ist zu beachten, daß das erhaltene Zwischenergebnis um jeweils die Stellenzahl zu verschieben ist, um die auch das zugehörige Ziffernpaar im Multiplikator verschoben ist. In der Fig. 2B sind die zu den jeweiligen Faktoren zugehörigen Zwischenprodukte mit der Bezeichnung PP1 bis PP5 gekennzeichnet. Die eingekreiste "1" bei den Zwischenprodukten PP3 und PP4 bedeutet, daß diese Zwischenprodukte ein negatives Vorzeichen besitzen.

Die Zwischenprodukte PP1 bis PP5 werden nacheinander unter Bildung von Zwischensummen S1 bis S3 addiert. Ein negatives Vorzeichen eines Zwischenprodukts wird dadurch berücksichtigt, daß die Summe oder der Übertrag der höchstwertigsten Stelle der Zwischensumme um zwei weitere Stellen propagiert wird. Ergibt sich bei der Addition der Zwischensumme S3 und des Zwischenprodukts PP5 zum Endprodukt EP ein Übertrag, so wird dieser als Folge der Anwendung des Booth-Algorithmus ignoriert; dies ist in der Fig. 2B durch die Bezeichnung "x" gekennzeichnet. Das Entprodukt EP ohne die mit "x" gekennzeichnete Stelle stellt dann das Produkt des Multiplikanden mit dem Multiplikator dar.

Die Kodierung der Ziffern C0 bis C28 und C29 bis C57 des Multiplikators in Faktoren entsprechend der Tabelle der Fig. 2A wird in der Kodiereinheit 12 durchgeführt. Die Faktoren werden dabei in Form der bereits genannten Ausgangssignale 1X, 2X, TX, T1X dargestellt, wobei entsprechend den vorstehenden Erläuterungen jeder zu einem i gehörigen Ziffergruppe ein Satz Ausgangssignale zugeordnet ist.

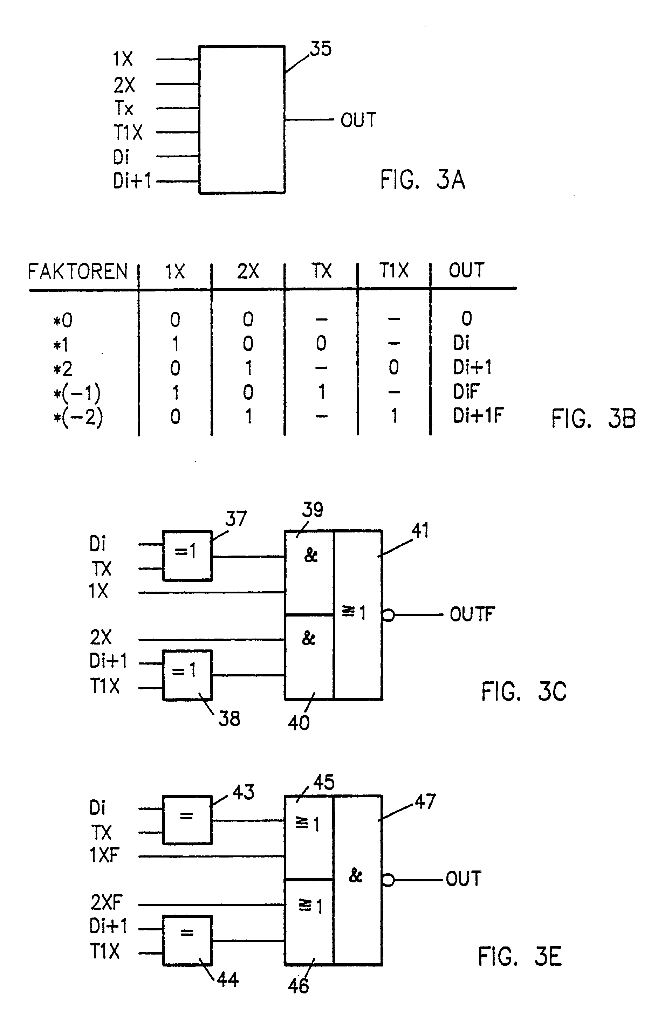

Die Multiplikationen der von der Kodiereinheit gebildeten Faktoren mit dem Multiplikanden werden in den Multiplizierfeldern 20, 22 durchgeführt. Dem Multiplizierfeld 20 sind die den Ziffern C0 bis C28 des Multiplikators zugehörigen Faktoren und dem Multiplizierfeld 22 die den Ziffern C29 bis C57 des Multiplikators zugeordneten Faktoren zugeführt. Die Multiplikationen werden mit Hilfe von in den Multiplizierfeldern 20, 22 enthaltenen Auswahlschaltungen MUX 35 vorgenommen, von denen eine in der Fig. 3A gezeigt ist.

Der in der Fig. 3A als schematischer Block dargestellten Auswahlschaltung 35 sind die Ausgangssignale 1X, 2X, TX, T1X der Kodiereinheit 12 sowie 2 aufeinanderfolgende Ziffern Di und Di + 1 des Multiplikanden zugeführt, wobei diese Ausgangsignale und die genannten Ziffern des Multiplikanden jeweils einer zu einem i gehörigen Ziffergruppe des Multiplikators zugeordnet sind. Aus diesen Eingangssignalen erzeugt die Auswahlschaltung 35 ein Ausgangssignal OUT in der in der Tabelle der Fig. 3B angegebenen Weise.

Sind die Ausgangsignale 1X und 2X beide gleich 0, so ist der Multiplikand mit dem Faktor "0" zu multiplizieren. Ist das Ausgangssignal 1X gleich 1, so ist der Multiplikand mit dem Faktor "1" oder mit dem Faktor "-1" zu multiplizieren. Ist hingegen das Ausgangssignal 2X gleich 1, so ist der Multiplikand mit dem Faktor "2" oder mit dem Faktor "-2" zu multiplizieren. Mit den Ausgangsignalen TX und T1X wird entschieden, ob die zuvor genannten Faktoren positiv oder negativ sind. Ist TX gleich 1, so wird der Faktor "-1" ausgewählt, ist der Faktor T1X gleich 1, so gilt dasselbe für den Faktor "-2".

Wie noch erläutert werden wird, ist jeder Stelle des Multiplikanden eine Auswahlschaltung 35 zugeordnet. Ist diese Auswahlschaltung mit Eingangssignalen beaufschlagt, die den Faktor "1" darstellen, so schaltet die Auswahlschaltung 35 die Ziffer Di des Multiplikanden an den Ausgang durch. Dies entspricht einer Multiplikation dieser Stelle des Multiplikanden mit 1. Stellen hingegen die Eingangssignale der Auswahlschaltung 35 den Faktor "2" dar, so wird die Ziffer Di + 1 des Multiplikanden als Ausgangssignal weitergegeben. Die Ziffer Di + 1 besitzt eine um eine Stelle niederere Wertigkeit als die Ziffer Di des Multiplikanden. Damit stellt das Durchschalten der Ziffer Di + 1 auf den Ausgang der Auswahlschaltung 35 ein Verschieben des Multiplikanden um eine Stelle hin zu höherer Wertigkeit dar, was wiederum einer Multiplikation des Multiplikanden mit 2 entspricht. Stellen die Eingangssignale der Auswahlschaltung 35 die Faktoren "-1" oder "-2" dar, so werden als Ausgangssignale die entsprechenden negierten Ziffern DiF und Di + 1F des Multiplikanden am Ausgang erzeugt.

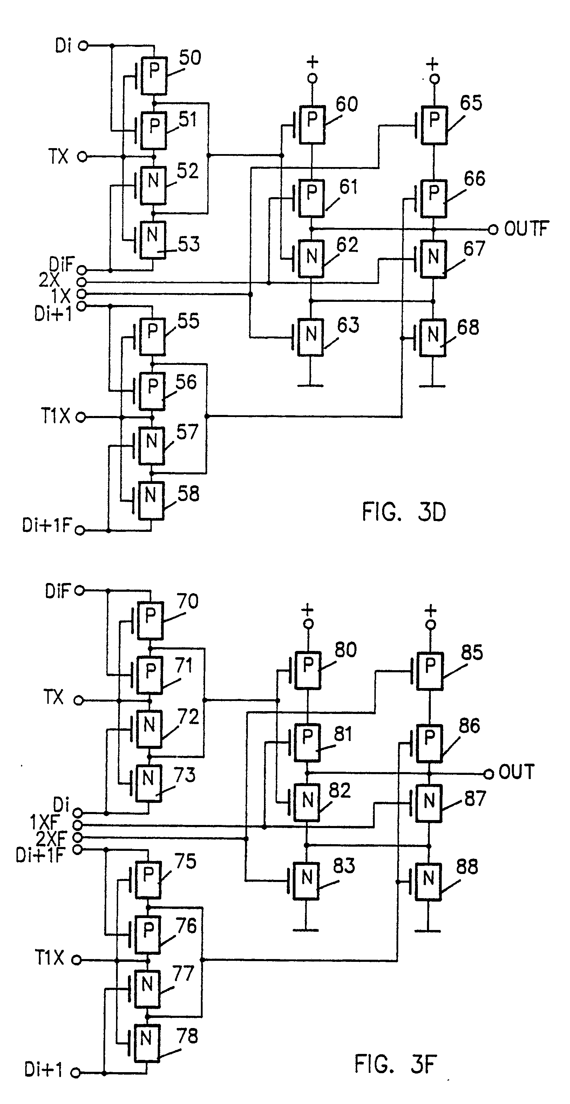

In den Fign. 3C und 3D sowie den Fign. 3E und 3F sind zwei Ausführungsbeispiele für Realisierungen

4

der Auswahlschaltung 35 dargestellt.

Bei dem Ausführungsbeispiel nach der Fig. 3C sind die Signale Di und TX sowie die Signale Di + 1 und T1X jeweils einem XOR-Glied 37, 38 zugeführt, deren Ausgangssignale jeweils ein UND-Glied 39, 40 beaufschlagen. Dem UND-Glied 39 ist des weiteren das Signal 1X und dem UND-Glied 40 das Signal 2X zugeführt. Die Ausgänge der UND-Glieder 39, 40 sind mit einem negierten ODER-Glied 41 verbunden, an dessen Ausgang das negierte Signal OUTF zur Verfügung steht.

Die in der Fig. 3C gezeigte Auswahlschaltung 35 kann in der Form einer Schaltung nach der Fig. 3D in CMOS-Technologie realisiert werden. Dort bilden Transistoren 50, 51, 52, 53 sowie Transistoren 55, 56, 57, 58 eine Serienschaltung. Die Transistoren 50, 51, 55, 56 sind vom P-Typ, die Transistoren 52, 53, 57, 58 vom N-Typ.

Die Ziffer Di des Multiplikanden ist dem Transistor 50 und dem Gate des Transistors 51 zugeführt, die negierte Ziffer DiF dem Gate des Transistors 52 und dem Transistor 53. Endsprechend ist die Ziffer Di + 1 sowie die negierte Ziffer Di + 1F an die Transistoren 55, 56 sowie die Transistoren 57, 58 angeschlossen. Das Signal TX beaufschlagt die Gates der beiden Transistoren 50, 53, die mit dem Verknüpfungspunkt der Transistoren 51, 52 verbunden sind. Endsprechend ist das Signal T1X an die Transistoren 55, 58 sowie die Transistoren 56, 57 angeschlossen. Weitere Transistoren 60, 61, 62, 63 sowie Transistoren 65, 66, 67, 68 bilden jeweils eine Serienschaltung von einer positiven Versorgungsspannung nach Masse. Die Transistoren 60, 61, 65, 66 sind vom P-Typ, die Transistoren 62, 63, 67, 68 vom N-Typ. Die Gates der Transistoren 60, 62 sind mit den Verknüpfungspunkten der Transistoren 50, 51 sowie der Transistoren 52, 53 verbunden. Entsprechend sind die Gates der Transistoren 66, 68 mit den Verknüpfungspunkten der Transistoren 55, 56 sowie der Transistoren 57, 58 verbunden. Den Gates der Transistoren 61, 67 ist das Signal 2X und den Gates der Transistoren 63, 65 ist das Signal 1X zugeführt. Die Verknüpfungspunkte der Transistoren 62, 63 und der Transistoren 67, 68 sind miteinander verbunden. Ebenfalls sind die Verknüpfungspunkte der Transistoren 61, 62 und der Transistoren 66, 67 miteinander verbunden, wobei an diesem Punkt das Ausgangssignal OUTF zur Verfügung steht.

Bei dem in der Fig. 3E dargestellten Ausführungsbeispiel der Auswahlschaltung 35 sind die Signale Di und TX sowie die Signale Di + 1 und T1X jeweils einem XNOR-Glied 43, 44 zugeführt, deren Ausgangssignale jeweils ein ODER-Glied 45, 46 beaufschlagen. Des weiteren sind den ODER-Gliedern 45, 46 die negierten Signale 1XF und 2XF zugeführt. Die Ausgänge der beiden ODER-Gliedern 45, 46 sind mit einem negierten UND-Glied 47 verbunden, an dessen Ausgang das Signal OUT zur Verfügung steht.

Diese in der Fig. 3E gezeigte Auswahlschaltung 35 kann durch die in der Fig. 3F dargestellten Schaltung realisiert werden. Diese Schaltung enthält Transistoren 70 bis 73, 75 bis 78, 80 bis 83 und 85 bis 88. Die Verschaltung dieser Transistoren entspricht derjenigen der in der Fig. 3D gezeigten Schaltung. Auch die Signale TX und T1X beaufschlagen in gleicher Weise die Schaltung der Fig. 3F wie im Falle der Schaltung der Fig. 3D.

Die Signale Di, DiF, Di + 1, Di + 1F sind jedoch im Vergleich zur Schaltung nach der Fig. 3D bei der Schaltung nach der Fig. 3F jeweils negiert. Statt den Signalen 2X und 1X in der Schaltung nach der Fig. 3D werden bei der Schaltung nach der Fig. 3F an gleicher Stelle die negierten Signale 1XF und 2XF zugeführt. Als Ausgangsignal steht bei der Schaltung nach der Fig. 3F das Signal OUT zur Verfügung.

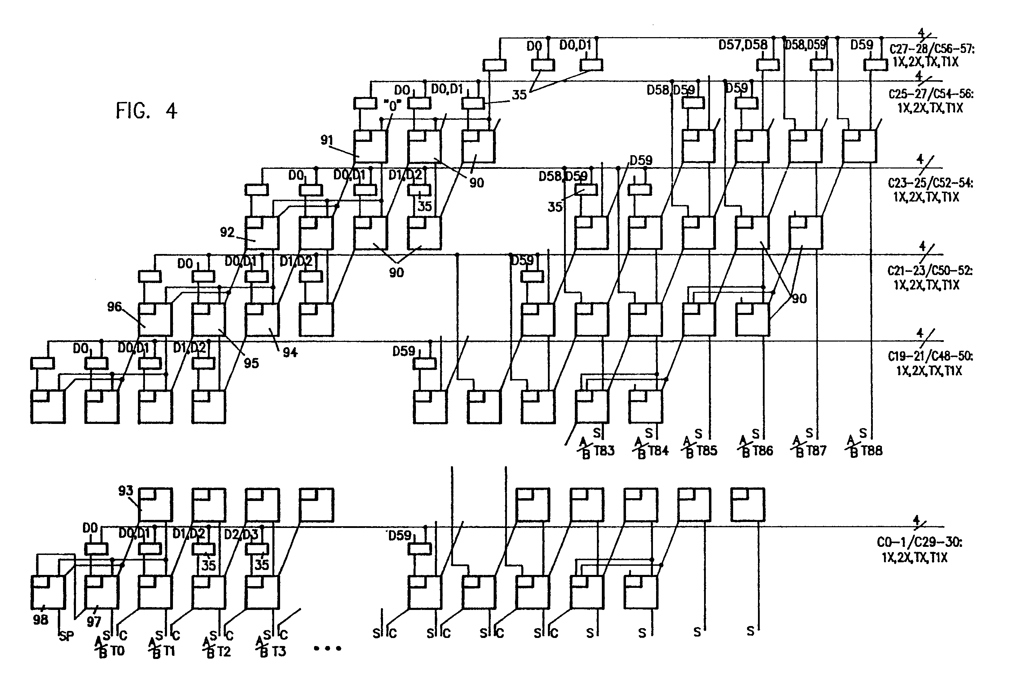

In der Fig. 4 ist eines der Multiplizierfelder 20, 22 in allgemeiner Form als schematisches Blockschaltbild dargestellt. Jedes dieser Multiplizierfelder 20, 22 ist aus einer Vielzahl von Addiergliedern 90 aufgebaut, die in Reihen und Spalten angeordnet sind. Eine Anzahl der Addierglieder 90 ist in der Fig. 4 mit besonderen Kennzeichnungen 91 bis 98 versehen.

Jede Spalte des in der Fig. 4 gezeigten Multiplizierfeldes ist einer binären Stelle zugeordnet, wobei die höchstwertigste Stelle in der Fig. 4 links angeordnet ist. In jeder Zeile des dargestellten Multiplizierfeldes werden die Ziffern D0 bis D59 des Multiplikanden mit den zu den Ziffern C0 bis C57 des Multiplikators zugehörigen Faktoren multipliziert und jeweils zum vorhergehenden Zwischenprodukt addiert. Zu diesem Zweck ist einem Eingang der Addierglieder 90 jeweils eine Auswahlschaltung 35 vorgeschaltet, mit der die Multiplikation in der betreffenden Stelle durchgeführt wird, während der andere Eingang der Addierglieder 90 jeweils mit der entsprechenden Stelle des vorhergehenden Zwischenprodukts beaufschlagt ist.

Die in der Fig. 4 von oben nach unten aufeinanderfolgenden Zeilen sind hinsichtlich ihrer Addierglieder 90 entsprechend der Zuordnung der Zeilen zu den Ziffern des Multiplikators jeweils um zwei Stellen hin zu höheren Wertigkeiten verschoben. Die im Zusammenhang mit dem in der Fig. 2B dargestellten Rechenbeispiel erwähnte Propagation um zwei Stellen im Falle eines negativen Zwischenproduktes wird bei dem in der Fig. 4 gezeigten Multiplizierfeld dadurch erreicht, daß beispielsweise die Ausgangssignale des Addierglieds 92, also Summe und Übertrag, den entsprechenden Eingängen der Addierglieder 94, 95 und 96 zugeführt sind.

Bei dem in der Fig. 4 gezeigten Multiplizierfeld steht das aus der Addition der Zwischenprodukte erhaltene Ergebnis an den Ausgängen derjenigen Addierglieder 90 zur Verfügung, die in den einzelnen Spalten in der letzten unteren Zeile angeordnet sind. Das Endprodukt besteht in jeder Spalte, also in jeder Stelle aus einer Summenziffer S und einer sich aus der nächst niederwertigen Stelle ergebenden Übertragsziffer C. Wie bereits erwähnt, handelt es sich bei dem Multiplizierfeld 20 um das Teilendprodukt AT0 bis AT88 und bei dem Multiplizierfeld 22 um das Teilendprodukt BT0 bis BT88.

Als weiteres Ausgangssignal wird von dem in Fig. 4 dargestellten Multiplizierfeld, und zwar dort von dem Addierglied 98, ein Signal SP erzeugt. Dieses Signal SP ist nur dann logisch "1", wenn entweder ein Übertrag aus dem Addierglied 97 vorhanden ist, oder eines der Ausgangsignale des Addierglieds 93 logisch "1" ist. Dabei können diese beiden genannten Ausgangssignale niemals gleichzeitig logisch "1" sein. Dies ergibt sich daraus, daß dem Addierglied 91 als Eingangssignal eine logische "0" zugeführt ist. Dadurch kann das Ergebnis der Addition im Addierglied 91 niemals den Wert 2 überschreiten. Durch die Propagation der Ausgangssignale des Addierglieds 91 um zwei Stellen ist somit eines der Eingangsignale des Addierglieds 92 in jedem Fall logisch "0". Somit kann auch die Addition im Addierglied 92 niemals den Wert 2 überschreiten. Diese Funktion setzt sich über die weiteren Zeilen fort bis hin zum Addierglied 93. Dort ist dann, wie erwähnt, in jedem Fall eines der beiden Ausgangssignale des Addierglieds 93 logisch "0". Das Ausgangssignal SP des Addierglieds 98 stellt somit eine ODER-Verknüpfung des Vorzeichens aus der das Addierglied 93 enthaltenden, vorletzten Zeile mit dem Übertrag aus der das Addierglied 97 enthaltenden, letzten Zeile dar.

Die Berechnung der beiden Teilendprodukte AT0 bis AT88 und BT0 bis BT88 aus dem Multiplikanden und den von dem Multiplikator abgeleiteten Faktoren erfolgt in den beiden Multiplizierfeldern 20, 22 zeitparallel, also etwa gleichzeitig. Die Teilendprodukte AT0 bis AT88 und BT0 bis BT88 stehen somit im wesentlichen gleichzeitig an den Ausgängen der Multiplizierfelder 20, 22 zur Zwischenspeicherung in den Zwischenspeichern 21, 23 sowie zur Weiterverarbeitung zur Verfügung.

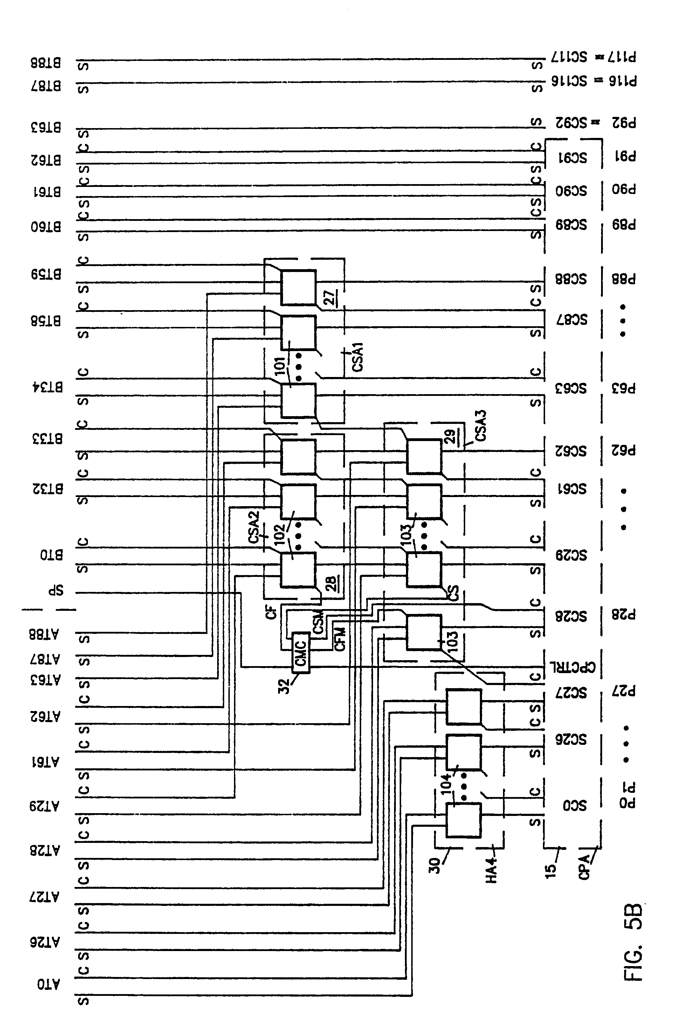

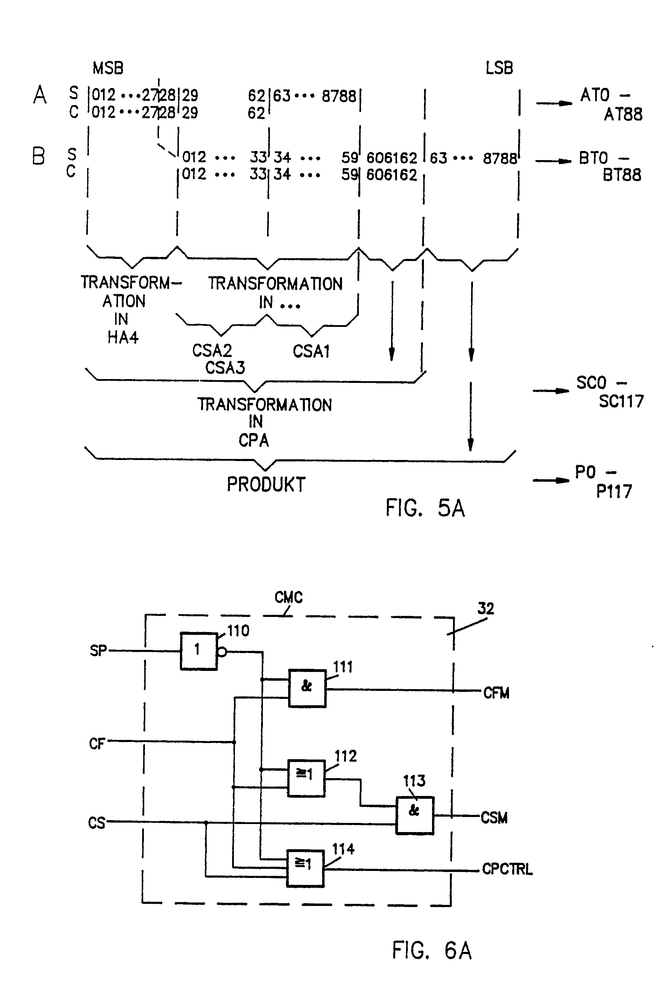

In den Fign. 5A und 5B ist in schematischer Weise die Verknüpfung der beiden Teilendprodukte AT0 bis AT88 und BT0 bis BT88 zum Endprodukt P0 bis P117 dargestellt. Die beiden Teilendprodukte sind dabei jeweils aus den Summenziffern 0 bis 88 und den Übertragsziffern 0 bis 62 aufgebaut.

Die Summenziffern 63 bis 88 des Teilendprodukts BT0 bis BT88 stellen direkt die Ziffern P92 bis P117 des Endprodukts P0 bis P117 dar.

Die Summen- und Übertragsziffern 60 bis 62 des Teilendprodukts BT0 bis BT88 sind dem Übertragsaddierfeld 15 zugeführt und werden dort zu den Ziffern P89 bis P91 des Endprodukts P0 bis P117 transformiert. Das Übertragsaddierfeld 15 enthält eine Mehrzahl von Addiergliedern, mit deren Hilfe die Überträge aus einzelnen Stellen jeweils zur nächst höherwertigen Stelle hinzu addiert werden.

Die Summenziffern 63 bis 88 des Teilendprodukts AT0 bis AT88 sowie die Summen- und Übertragsziffern 34 bis 59 des Teilendprodukts BT0 bis BT88 sind dem ersten Addierfeld CSA1, 27 zugeführt, das eine Vielzahl von Addiergliedern 101 enthält. Jedem Addierglied 101 sind einander stellenmäßig entsprechende Summenziffern der Teilendprodukte AT0 bis AT88 und BT0 bis BT88 sowie die Übertragsziffer der nächst niederwertigen Stelle des Teilendprodukts BT0 bis BT88 zugeführt. Daraus erzeugen die Addierglieder 101 des ersten Addierfelds 27 ein erstes Zwischenergebnis SC63 bis SC88, das in jeder Stelle aus einer Summe und einem Übertrag besteht. Dieses erste Zwischenergebnis wird im Übertragsaddierfeld 15 zu den Ziffern P63 bis P88 des Endprodukts P0 bis P117 weiterverarbeitet.

Die Summen- und Übertragsziffern 28 bis 62 des Teilendprodukts AT0 bis AT88 sowie die Summen- und Übertragsziffern 0 bis 33 des Teilendprodukts BT0 bis BT88 sind den zweiten und dritten Addierfeldern CSA2, 28 und CSA3, 29 zugeführt. Die Addierfelder 28, 29 enthalten eine Mehrzahl Addierglieder 102, 103, die den einzelnen Stellen zugeordnet sind. In den Addierglieder 102 des Addierfelds 28 werden einander stellenmäßig entsprechende Summenziffern der beiden Teilendprodukte AT0 bis AT88 und BT0 bis BT88 sowie die jeweils nächst niederwertige Übertragsziffer des Teilendprodukts BT0 bis BT88 zu einem in jeder Stelle aus Summe und Übertrag bestehenden zweiten Zwischenergebnis addiert. In den Addiergliedern 103 des dritten Addierfeldes 29 wird dann jeweils die stellenmäßig entsprechende Summe aus dem zweiten Zwischenergebnis, der nächst niederwertige Übertrag aus dem zweiten Zwischenergebnis sowie die nächst niederwertige Übertragsziffer des Teilend rodukts AT0 bis AT88 zueinander addiert unter Bildung eines dritten Zwischenergebnisses SC28 bis SC62, das in jeder Stelle aus einer Summe und einem Übertrag besteht, und das im nachfolgenden Übertragsaddierfeld 15 zu den Ziffern P28 bis P62 des Endprodukts P0 bis P117 transformiert wird.

Die Summen- und Übertragsziffern 0 bis 27 des Teilendprodukts AT0 bis AT88 sind dem vierten Addierfeld HA4, 30 zugeführt. Dieses enthält eine Vielzahl von Halbaddiergliedern 104. In jedem der Halbaddierglieder 104 wird zu der Summenziffer die nächst niederwertige Übertragsziffer addiert. Das vierte Addierfeld 30 bildet ein viertes Zwischenergebnis SC0 bis SC27, das in jeder Stelle aus einer Summe und einem Übertrag besteht. Dieses vierte Zwischenergebnis wird in dem Übertragsaddierfeld 15 zu den Ziffern P0 bis P27 des Endprodukts P0 bis P117 transformiert.

Wie anhand des in der Fig. 2B dargestellten Rechenbeispiels erläutert worden ist, muß ein dort mit "x" gekennzeichneter Übertrag in der höchsten Stelle des Endprodukts EP ignoriert werden. Dies wird in der Schaltung nach der Fig. 5B mit Hilfe der Übertragsmodifiziereinheit CMC 32 erreicht.

Dieser Übertragsmodifiziereinheit 3 ist das von dem Multiplizierfeld 22 erzeugte Signal SP, der mit CF gekennzeichnete Übertrag aus dem höchstwertigen Addierglied 102 des zweiten Addierfeldes 28 sowie der mit CS gekennzeichnete Übertrag des dazu stellenmäßig entsprechenden Addierglieds 103 des dritten Addierfelds 29 zugeführt. Diese Eingangsignale modifiziert die Übertragsmodifiziereinheit 32 zu Signalen SPM = CPCTRL, CFM sowie CSM. Das Signal SPM ist de Übertragsaddierfeld 15 zugeführt, das Signal CFM beaufschlagt das höchstwertige Addierglied 103 des dritten Addierfelds 29 und das Signal CSM ist als Übertrag des dritten Addierfeldes 29 an das Übertragsaddierfeld 15 angeschlossen.

Die Verknüpfung der genannten Eingangs- und Ausgangssignale der Übertragsmodifiziereinheit 32 ist in dem schematischen Blockschaltbild der Fig. 6A dargestellt. Dort ist einem Inverter 110 das Signal SP zugeführt. Der Ausgang des Inverters 110 ist mit jeweils einem Eingang eines UND-Glieds 111, eines ODER-Glieds 112 und eines weiteren ODER-Glieds 114 verbunden. Jeweils einem weiteren Eingang der zuletzt genannten Bauelemente ist das Signal CF zugeführt. Das Signal CS beaufschlagt einen dritten Eingang des ODER-Glieds 114 sowie ein weiteres UND-Glied 113. Ein weiterer Eingang dieses UND-Glieds 113 ist mit dem Ausgang des ODER-Glieds 112 verbunden. Am Ausgang des UND-Glieds 111 steht das Signale CFM, am Ausgang des UND-Glieds 113 das Signal CSM und am Ausgang des ODER-Glieds 114 das Signal CPCTRL zur Verfügung.

Die Übertragsmodifiziereinheit 32 führt somit die folgenden Funktionen aus:
CFM = SPF • CF, CSM = (SPF + CF) • CS sowie SPM = CPCTRL = SPF + CF + CS, wobei "•" = UND, "+" = ODER.

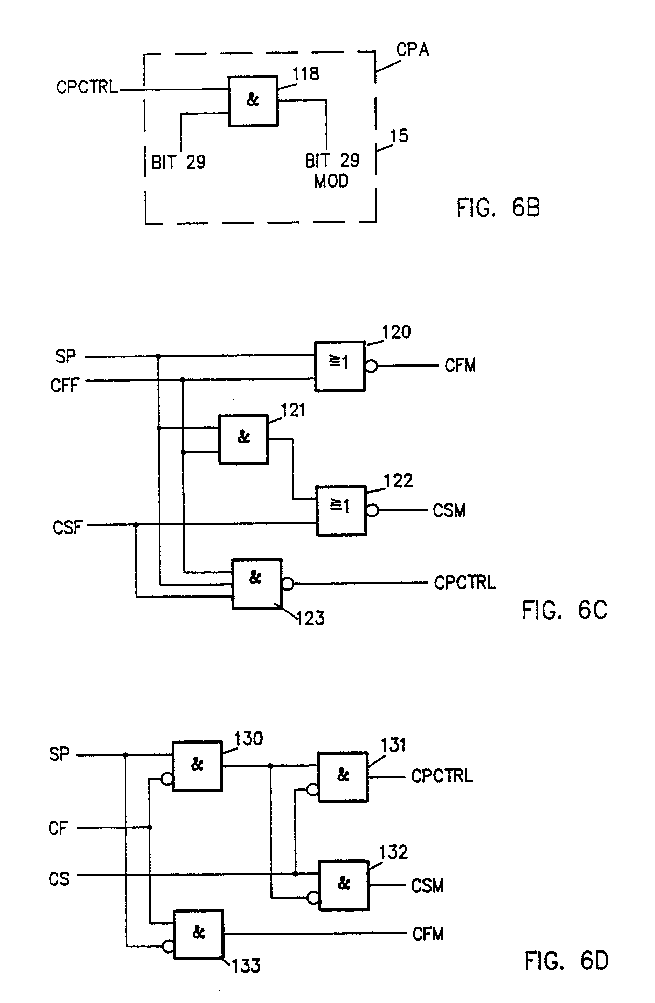

Ergibt sich mit Hilfe der Übertragsmodifiziereinheit 32, daß der anhand des Rechenbeispiels der Fig. 2B erläuterte und mit "x" gekennzeichnete Übertrag ignoriert werden muß, so wird dies durch das Signal CPCTRL erreicht. Hierzu ist entsprechend der Schaltung nach der Fig. 6B im Übertragsaddierfeld 15 ein UND-Glied 118 vorgesehen, das in Abhängigkeit von dem Eingangsignal CPCTRL die Bitstelle 29 modifiziert.

In den Fign. 6C und 6D sind in Form von schematischen Blockschaltbildern zwei Ausführungsbeispiele der Übertragsmodifiziereinheit 32 dargestellt.

Die Schaltung nach der Fig. 6C enthält zwei negierende ODER-Glieder 120, 122, ein UND-Glied 121 sowie ein weiteres negierendes UND-Glied 123. Das Signal SP ist dem Oder-Glied 120, dem UND-Glied 121 sowie dem UND-Glied 123 zugeführt. Entsprechendes gilt für das negierte Signal CFF. Das negierte Signal CSF beaufschlagt das ODER-Glied 122 sowie das UND-Glied 123. Der weitere Eingang des ODER-Glieds 122 ist mit dem Ausgang des UND-Glieds 121 verbunden. Am Ausgang des ODER-Glieds 120 steht das Signal CFM, am Ausgang des ODER-Glieds 122 das Signal CSM und am Ausgang des UND-Glieds 123 das Signal CPCTRL zur Verfügung.

Die Schaltung nach der Fig. 6B enthält vier UND-Glieder 130, 131, 132, 133, bei denen jeweils ein Eingang inver tierend geschaltet ist. Das Signal SP ist dem nicht-invertierenden Eingang des UND-Glieds 130 und dem invertierenden Eingang des UND-Glieds 133 zugeführt. Das Signal CF beaufschlagt den invertierenden Eingang des UND-Glieds 130 sowie den nicht-invertierenden Eingang des UND-Glieds 133. Der Ausgang des UND-Glieds 130 ist mit dem nicht-invertierenden Eingang des UND-Glieds 131 und mit dem invertierenden Eingang des UND-Glieds 132 verbunden. Das Signal CS ist an den invertierenden Eingang des UND-Glieds 131 und an den nichtinvertierenden Eingang UND-Glieds 132 angeschlossen. Am Ausgang des UND-Glieds 131 steht das Signal CPCTRL, am Ausgang des UND-Glieds 132 das Signal CSM und am Ausgang des UND-Glieds 133 das Signal CFM zur Verfügung.

## Ansprüche

1. Multiplizierer zum Multiplizieren eines ersten Operanden (MAND, D0 bis D59) mit einem zweiten Operanden (MIER, C0 bis C57), mit einer Kodiereinheit (12), der der zweite Operand (MIER) zugeführt ist und die aus Ziffern des zweiten Operanden (MIER) nach einem vorgegebenen Algorithmus Faktoren bildet, sowie mit einer Multipliziereinheit (10), der der erste Operand (MAND) und die von der Kodiereinheit (12) gebildeten Faktoren zugeführt sind und die den ersten Operanden (MAND) mit den Faktoren multipliziert und die erhaltenen Zwischenprodukte zu einem Endprodukt (PROD, P0 bis P117) addiert,
dadurch gekennzeichnet, daß
die Multipliziereinheit (10) zwei Multiplizierfelder (20, 22) enthält, denen jeweils der erste Operand (MAND) sowie dem einen Feld (20) die zu den höherwertigeren Ziffern (C0 bis C28) des zweiten Operanden (MIER) zugehörigen Faktoren und dem anderen Feld (22) die zu den niederwertigeren Ziffern (C29 bis C57) des zweiten Operandern (MIER) zugehörigen Faktoren zugeführt sind, und die jeweils den ersten Operanden (MAND) zeitparallel mit den ihnen zugeführten Faktoren multiplizieren und die erhaltenen Zwischenprodukte zu einem Teilendprodukt (AT0 bis AT88, BT0 bis BT88) addieren, und daß eine Verknüpfungseinheit (25) vorgesehen ist, der die beiden von den Multiplizierfeldern (20, 22) gebildeten Teilendprodukte (AT0 bis AT88, BT0 bis BT88) zugeführt sind und die die Teilendprodukte (AT0 bis AT88, BT0 bis BT88) unter Berücksichtigung des in der Kodier einheit (12) verwendeten Algorithmus zum Endprodukt (PROD, P0 bis P117) verknüpft.

2. Multiplizierer nach Anspruch 1,
dadurch gekennzeichnet, daß
in der Verknüpfungseinheit (25) ein erstes Addierfeld CSA1 (27) und ein zweites Addierfeld CSA2 (28) vorgesehen ist, denen jeweils stellenmäßig entsprechende Ziffern der beiden Teilendprodukte (AT29 bis AT88, BT0 bis BT59) zugeführt sind und die jeweils aus Summe und Übertrag bestehende erste und zweite Zwischenergebnisse bilden.

3. Multiplizierer nach Anspruch 2,
dadurch gekennzeichnet, daß
eine Anzahl von Stellen der beiden Teilendprodukte (AT0 bis AT62, BT0 bis BT62) aus einer Summenziffer und einer Übertragsziffer zusammengesetzt ist, und daß die stellenmäßig nächst niederwertigen Übertragsziffern des niederwertigeren Teilendprodukts (BT0 bis BT59) den ersten und zweiten Addierfeldern (27, 28) zugeführt sind.

4. Multiplizierer nach Anspruch 3,
dadurch gekennzeichnet, daß
ein drittes Addierfeld CSA3 (29) vorgesehen ist, dem die Summen und die nächst niederwertigen Überträge der zweiten Zwischenergebnisse sowie die nächst niederwertigen Übertragsziffern des höherwertigeren Teilendprodukts (AT28 bis AT62) zugeführt sind und das jeweils aus Summe und Übertrag bestehende dritte Zwischenergebnisse bildet.

5. Multiplizierer nach Anspruch 4,
dadurch gekennzeichnet, daß
ein viertes Addierfeld HA4 (30) vorgesehen ist, dem Summenziffern und die nächst niederwertigen Übertragsziffern des höherwertigeren Teilendprodukts (AT0 bis AT27) zugeführt sind und das jeweils aus Summe und Übertrag bestehende vierte Zwischenergebnisse bildet.

6. Multiplizierer nach Anspruch 5,
dadurch gekennzeichnet, daß
ein Übertragsaddierfeld CPA (15) vorgesehen ist, dem die Summen und die nächst niederwertigen Überträge der ersten, dritten und vierten Zwischenergebnisse sowie Summenziffern und die nächst niederwertigen Übertragsziffern der niederwertigen Stellen des niederwertigeren Teilendprodukts (BT60 bis BT88) zugeführt sind und das das Endprodukt PROD (P0 bis P117) bildet.

7. Multiplizierer nach Anspruch 6,
dadurch gekennzeichnet, daß
eine Übertragsmodifiziereinheit CMC (32) vorgesehen ist, der bei Anwendung des Booth-Algorithmus das Vorzeichen (SP) des niederwertigeren Teilendprodukts (BT0 bis BT88) sowie jeweils der Übertrag des der höchstwertigen Stelle des niederwertigeren Teilendprodukts zugeordneten Addierglieds des zweiten und des dritten Addierfeldes (28, 29) zugeführt ist, und die auf das genannte Vorzeichen (SP) und die genannten Überträge einwirkt.

8. Multiplizierer nach Anspruch 7,
dadurch gekennzeichnet, daß
in der Übertragsmodifiziereinheit CMC (32) die folgenden Funktionen enthalten sind:
CFM = SPF $\cdot$ CF,
CSM = (SPF + CF) $\cdot$ CF,
SPM = CPCTRL = SPF + CF + CS; wobei
SP = Vorzeichen, SPF = negiertes Vorzeichen,
CF = Übertrag C des höchstwertigen Addierglieds des zweiten Addierfeldes (28),
CS = Übertrag C des höchstwertigen Addierglieds des dritten Addierfelds (29),
SPM = modifiziertes Vorzeichen SP,
CFM = CSM = modifizierter Übertrag CF, CS, wobei "$\cdot$" = UND, "+" = ODER.

9. Multiplizierer nach einem der Ansprüche 1 bis 8,
dadurch gekennzeichnet, daß

die Kodiereinheit (12) aus den Ziffern des zweiten Operanden (MIER, C0 bis C57) unter Anwendung des Booth-Algorithmus die folgenden, die Faktoren darstellenden Ausgangssignale erzeugt:

| Ziffernpaar i des zweiten Operanden | | zusätzliche Ziffer | Faktoren zu dem Ziffernpaar i gehörig | Ausgangssignale zu dem Ziffernpaar i gehörig | | | |
|---|---|---|---|---|---|---|---|
| Ci - 1 | Ci | Ci + 1 | | 1X | 2X | TX | T1X |
| 0 | 0 | 0 | ˙ 0 | 0 | 0 | - | - |
| 0 | 0 | 1 | ˙ 1 | 1 | 0 | 0 | - |
| 0 | 1 | 0 | ˙ 1 | 1 | 0 | 0 | - |
| 0 | 1 | 1 | ˙ 2 | 0 | 1 | - | 0 |
| 1 | 0 | 0 | ˙ (-2) | 0 | 1 | - | 1 |
| 1 | 0 | 1 | ˙ (-1) | 1 | 0 | 1 | - |
| 1 | 1 | 0 | ˙ (-1) | 1 | 0 | 1 | - |
| 1 | 1 | 1 | ˙ 0 | 0 | 0 | - | - |

10. Multiplizierer nach Anspruch 9, dadurch gekennzeichnet, daß
die Multipliziereinheit (10) aus den Ausgangssignalen der Kodiereinheit (12) die Ziffern des ersten Operanden (MAND, D0 bis D59) wie folgt auswählt:

| Ausgangssignale zu dem Ziffernpaar i des zweiten Operanden gehörig | | | | Faktoren zu dem Ziffernpaar i gehörig | Zu dem Ziffernpaar i des zweiten Operanden gehörige ausgewählte Ziffern des ersten Operanden |
|---|---|---|---|---|---|
| 1X | 2X | TX | T1X | | |
| 0 | 0 | - | - | * 0 | 0 |
| 1 | 0 | 0 | - | * 1 | Di |
| 0 | 1 | - | 0 | * 2 | Di + 1 |
| 1 | 0 | 1 | - | * (-1) | DiF |
| 0 | 1 | - | 1 | * (-2) | Di + 1F |

11. Multiplizierer nach einem der Ansprüche 1 bis 10,
dadurch gekennzeichnet, daß
bei Anwendung des Booth-Algorithmus die Multiplizierfelder (20, 22) derart aufgebaut sind, daß die Zwischenprodukte nacheinander addiert werden, und daß die Vorzeichen der entstehenden Zwischensummen jeweils um 2 Stellen propagiert werden.

12. Multiplizierer nach Anspruch 11,
dadurch gekennzeichnet, daß
die Multiplizierfelder (20, 22) derart aufgebaut sind, daß die Vorzeichen (SP) der Teilendprodukte (AT0 bis AT88, BT0 bis BT88) mittels einer Rückkopplung des Übertrags aus der höchstwertigsten Stelle des Teilendprodukts (AT0 bis AT88, BT0 bis BT88) gebildet werden.

13. Multiplizierer nach einem der Ansprüche 1 bis 12,
dadurch gekennzeichnet, daß
den Multiplizierfeldern (20, 22) Zwischenspeicher (21, 23) zur Zwischenspeicherung der beiden Teilendprodukte (AT0 bis AT88, BT0 bis BT88) zugeordnet sind.

14. Verfahren zum Multiplizieren eines ersten Operanden (MAND, D0 bis D59) mit einem zweiten Operanden (MIER, C0 bis C57), bei dem aus Ziffern des zweiten Operanden (MIER) nach einem vorgegebenen Algorithmus Faktoren gebildet werden, der erste Operand (MAND) mit den Faktoren multipliziert wird und die erhaltenen Zwischenprodukte zu einem Endprodukt (PROD, P0 bis P117) addiert werden,
dadurch gekennzeichnet, daß
der erste Operand (MAND) zeitparallel mit den zu den höherwertigeren Ziffern (C0 bis C28) des zweiten Operanden (MIER) zugehörigen Faktoren sowie mit den zu den niederwertigeren Ziffern (C29 bis C57) des zweiten Operanden (MIER) zugehörigen Faktoren multipliziert wird, daß jeweils die erhaltenen Zwischenprodukte zu einem Teilendprodukt (AT0 bis AT88, BT0 bis BT88) addiert werden, und daß die beiden Teilendprodukte (AT0 bis AT88, BT0 bis BT88) unter Berücksichtigung des verwendeten Algorithmus zum Endprodukt (PROD, P0 bis P117) verknüpft werden.

FIG. 1

C0-C28 / C29-C57 :

| $C_{i-1}$ | $C_i$ | $C_{i+1}$ | FAKTOREN |
|---|---|---|---|
| 0 | 0 | 0 | * 0 |
| 0 | 0 | 1 | * 1 |
| 0 | 1 | 0 | * 1 |
| 0 | 1 | 1 | * 2 |
| 1 | 0 | 0 | *(−2) |
| 1 | 0 | 1 | *(−1) |
| 1 | 1 | 0 | *(−1) |
| 1 | 1 | 1 | * 0 |

FIG. 2A

MULTIPLIKANT          MULTIPLIKATOR
10011010  *          1 0 1 1 0 1 0 0

PP1     00000000   *0 ←                                    000

PP2     10011010   *1 ←                              010

        01100101   *(−1) ←                     110
         +1
PP3   ①01100110                          101
        01100101   *(−1) ←
         +1
PP4  ①01100110
PP5  10011010      *1 ←        001
                        ↑
                   ——FAKTOREN

PP1          00000000
PP2          10011010
S1          1001101000   ←┐
                          │
S1          1001101000    ├─ ZWISCHENSUMMEN
PP3          01100110   ←┤
S2      111000110001000  ←┘

S2      111000110001000   ┌─ ZWISCHENPRODUKTE
PP4      01100110        ←┘
S3    1101001001001000

S3    1101001001001000
PP5   10011010
EP   X01101100001001000   PRODUKT

FIG. 2B

EP 0 383 965 A1

FIG. 3A

| FAKTOREN | 1X | 2X | TX | T1X | OUT |
|----------|----|----|----|----|-----|
| *0 | 0 | 0 | — | — | 0 |
| *1 | 1 | 0 | 0 | — | Di |
| *2 | 0 | 1 | — | 0 | Di+1 |
| *(−1) | 1 | 0 | 1 | — | DiF |
| *(−2) | 0 | 1 | — | 1 | Di+1F |

FIG. 3B

FIG. 3C

FIG. 3E

FIG. 3D

FIG. 3F

FIG. 4

FIG. 5B

FIG. 5A

FIG. 6A

FIG. 6B

FIG. 6C

FIG. 6D

Europäisches
Patentamt

EUROPÄISCHER RECHERCHENBERICHT

Nummer der Anmeldung

EP 89 10 2956

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 189 630 (STC PLC) <br> * Figuren 4-6 * | 1-2,14 | G 06 F 7/52 |
| A | | 3-6 | |
| | --- | | |
| X | EP-A-0 291 440 (UNITED TECHNOLOGIES CORP.) <br> * Spalte 1, Zeilen 55-63; Spalte 2, Zeile 51 - Spalte 3, Zeile 6; Spalte 4, Zeilen 9-39; Figuren 2-3 * | 1,9-14 | |
| A | | 7-8 | |
| | ----- | | |

RECHERCHIERTE SACHGEBIETE (Int. Cl.5)

G 06 F

Der vorliegende Recherchenbericht wurde für alle Patentansprüche erstellt

| Recherchenort | Abschlußdatum der Recherche | Prüfer |
|---|---|---|
| DEN HAAG | 02-11-1989 | BEINDORFF W.H. |